(19) Europäisches Patentamt
European Patent Office
Office européen des brevets

(11) **EP 1 872 100 B1**

(12) **EUROPÄISCHE PATENTSCHRIFT**

(45) Veröffentlichungstag und Bekanntmachung des Hinweises auf die Patenterteilung:
**17.06.2009   Patentblatt 2009/25**

(21) Anmeldenummer: **06742234.5**

(22) Anmeldetag: **10.04.2006**

(51) Int Cl.:
***G01G 23/12*** *(2006.01)*

(86) Internationale Anmeldenummer:
**PCT/DE2006/000633**

(87) Internationale Veröffentlichungsnummer:
**WO 2006/111131 (26.10.2006 Gazette 2006/43)**

(54) **WÄGEVORRICHTUNG, INSBESONDERE MEHRSPUR-WÄGEVORRICHTUNG**

WEIGHING DEVICE, IN PARTICULAR MULTIPLE-TRACK WEIGHING DEVICE

DISPOSITIF DE PESEE, NOTAMMENT DISPOSITIF DE PESEE A PLUSIEURS PISTES

(84) Benannte Vertragsstaaten:
**CH DE IT LI**

(30) Priorität: **21.04.2005   DE 102005018708**

(43) Veröffentlichungstag der Anmeldung:
**02.01.2008   Patentblatt 2008/01**

(73) Patentinhaber: **Wipotec Wiege- und Positioniersysteme GmbH**
**67657 Kaiserslautern (DE)**

(72) Erfinder:
• **GOTTFRIEDSEN, Jan**
**67714 Waldfieschbach-Burgalben (DE)**

• **URSCHEL, Patrick**
**67886 Mackenbach (DE)**

(74) Vertreter: **Eder, Thomas et al**
**Eder & Schieschke,**
**Patentanwälte,**
**Elisabethstrasse 34**
**80796 München (DE)**

(56) Entgegenhaltungen:
**DE-A1- 4 001 614          US-A- 4 553 618**
**US-A- 5 639 995          US-A1- 2001 052 431**
**US-B1- 6 313 414**

**EP 1 872 100 B1**

## Beschreibung

Die Erfindung betrifft eine Wägevorrichtung mit mehreren Wägezellen, so dass die Durchführung paralleler Wägevorgänge ermöglicht wird. Derartige Mehrspur-Wägevorrichtungen finden beispielsweise in der pharmazeutischen Industrie Verwendung und sind darauf ausgerichtet, kleingewichtige Güter, insbesondere Tabletten, Dragees und dergleichen mit hoher Taktrate zu wiegen.

Um die Anzahl der Wägevorgänge pro Stunde möglichst hoch zu halten, ist es bei derartigen Wägevorrichtungen nicht möglich, das Messsignal mit einem Tiefpassfilter mit relativ niedriger Grenzfrequenz zu beaufschlagen. Denn derartige Tiefpassfilter würden zwar die Genauigkeit eines Wägevorgangs verbessern, und insbesondere die in der pharmazeutischen Industrie erforderliche Genauigkeit erst ermöglichen, jedoch würde hierdurch auch der Einschwingvorgang so lange dauern, dass die erforderliche Anzahl von Wägevorgängen pro Stunde nicht erreichbar wäre.

Es ist daher für derartige Mehrspur-Wägevorrichtungen bekannt, an Stelle des Einsatzes von Tiefpassfiltern mit sehr niedriger Grenzfrequenz eine Korrektur des Ausgangssignals des eigentlichen Kraftsensors der Wägezelle durch die Erfassung von Störbeschleunigungen zu korrigieren und auf diese Weise den Einfluss von Störbeschleunigungen zu kompensieren.

Derartige Kompensationsverfahren sind für Waagen mit einer einzigen Wägezelle beispielsweise aus der DE 32 30 998 A1 bekannt. Bei dieser Wägevorrichtung ist im Gehäuse der Wägezelle in unmittelbarer Nähe der beweglichen Messmechanik ein Beschleunigungssensor angeordnet. Mit diesem Beschleunigungssensor werden im Wesentlichen dieselben Störbeschleunigungen detektiert, die auch auf die Last und die Masse der Messmechanik wirken. Das Sensorsignal wird dann verstärkt, um die Sensorempfindlichkeit an die Empfindlichlceit der Wägezelle anzugleichen und vom Signal der Wägezelle subtrahiert. Auf diese Weise wird ein um die detektierte Störbeschleunigung korrigiertes Messsignal erhalten, welches idealerweise nur noch von der Masse der zu wiegenden Last abhängt. Der Beschleunigungssensor ist dabei so angeordnet, dass er die in Lasteinleitungsrichtung wirkenden Komponenten von Störbeschleunigungen erfasst.

Aus der DE 40 01 614 A1 ist eine Kompensationswaage bekannt, bei der wenigstens ein Beschleunigungssensor an einem beweglichen Teil der Waage angeordnet ist. Der Beschleunigungssensor gibt ein Signal an eine korrehtursignalverarbeitende Anordnung ab, die wenigstens ein Korrektursignal zum Beeinflussen des Messergebnisses ermittelt, das am Ausgang als Maß für das Gewicht oder die Masse der Last auftritt, mit der das bewegliche Teil beaufschlagt wurde. Dieser Stand der Technik beschreibt auch die Kompensation bzw. Elimination des Einflusses von translatorischen und rotatorischen Störbeschleunigungen, die auf eine Grundplatte der Waage einwirken.

Der Einsatz derartiger Wägezellen mit jeweils einem oder mehreren Messaufhehmem zum Aufbau eines Mehrspur-Wägesystems wäre jedoch infolge der entsprechend hohen Anzahl von Beschleunigungssensoren mit hohen Kosten verbunden.

Deshalb wurde bei der Realisierung von Mehrspur-Wägesystemen eine entsprechende Anzahl von Wägezellen auf einer gemeinsamen Grundplatte angeordnet und auf dieser Grundplatte ein einziger Beschleunigungssensors angeordnet. Die Position des Beschleunigungssensor wurde dabei so gewählt, dass diese bei den üblicherweise zu erwartenden Störbeschleunigungen möglichst charakteristisch ist, d.h. dass mit dem Signal dieses einzigen Beschleunigungssensors die mit den auftretenden Störbeschleunigungen beaufschlagten Messsignale der einzelnen Wägezellen mit ausreichender Genauigkeit korrigiert werden können.

Derartige Mehrspur-Wägesysteme weisen jedoch den Nachteil auf, dass bei Störbeschleunigungen, die sich nicht in gleicher Weise auf die einzelnen Wägezellen auswirken, keine ausreichend exakte Kompensation der Störbeschleunigungen möglich ist und die erzeugten, korrigierten Gewichtssignale der einzelnen Wägezellen unter Umständen mit einem nicht akzeptablen Fehler beaufschlagt sind.

Der Erfindung liegt daher die Aufgabe zugrunde, eine Wägevorrichtung mit mehreren, mechanisch miteinander starr verbundenen Wägezellen zu schaffen, bei der die Gewichtssignale der einzelnen Wägezellen mit ausreichender Genauigkeit auch bei Auftreten solcher Störbeschleunigungen korrigiert werden können, die sich nicht in gleicher Weise auf sämtliche Wägezellen auswirken, und welche eine einfache und kostengünstige Konstruktion aufweist.

Die Erfindung löst diese Aufgabe mit den Merkmalen des Patentanspruchs 1.

Die Erfindung geht von der Erkenntnis aus, dass eine ausreichend exakte Kompensation von Störbeschleunigungen durch den Einsatz wenigstens eines Beschleunigungssensors möglich ist, welcher wenigstens eine Beschleunigungsstörgröße erfasst, wenn zusätzlich der Einfluss der erfassten Beschleunigungsstörgrößen unter Verwendung einer vorgegebenen Vorschrift für jede Wägezelle aus dem Störgrößensignal des wenigstens einen Beschleunigungssensors abhängig vom geometrischen Ort der betreffenden Wägezelle in Bezug auf den geometrischen Ort des wenigstens einen Beschleunigungssensors jeweils eine Korrekturgröße ermittelt wird, welche den am geometrischen Ort der betreffenden Wägezelle wirksamen Einfluss der wenigstens einen Beschleunigungsstörgröße berücksichtigt. Mit dieser für jede einzelne Wägezelle ermittelten Korrekturgröße kann dann das mit dem Einfluss der Störbeschleunigung beaufschlagte Gewichtssignal der betreffenden Wägezelle korrigiert werden. Hierzu kann die Korrekturgröße schaltungstechnisch, beispielsweise analog, mit dem Messsignal des eigentlichen Kraftmessers der Wägezelle verknüpft bzw. verschaltet werden. Selbstverständlich ist jedoch auch eine rein rechnerische Korrektur des Gewichtssignals mittels einer entsprechend gestalteten Auswerteeinheit möglich. Dieser können die digitalisierten Signale des Beschleunigungssensors und des Kraftaufnehmers zugeführt sein.

Der Beschleunigungssensor kann starr mit den untereinander starr verbundenen Wägezellen verbunden sein. Hierdurch ist sichergestellt, dass sich die auftretenden Störbeschleunigungen zwar möglicherweise unterschiedlich auf die einzelnen Wägezellen auswirken, dass jedoch das Auftreten von Schwingungen innerhalb des Systems der Wägezellen und des oder der Beschleunigungssensoren vermieden wird. Denn im letzteren Fall könnte nicht mit der erforderlichen Sicherheit mittels der Erfassung der wenigstens einen Beschleunigungsstörgröße an einem oder mehreren Orten auf die Auswirkung dieser Beschleunigungsstörgröße an den Orten der Wägezellen und damit auf die Wägezellen selbst geschlossen werden.

Es ist jedoch grundsätzlich denkbar, den wenigstens einen Beschleunigungssensor oder einen der Beschleunigungssensoren auch an der beweglichen Messmechanik einer oder mehrerer Wägezellen vorzusehen. Auf diese Weise kann direkt der Einfluss von Beschleunigungstörgrößen auf die Lastseite der betreffenden Wägezelle erfasst werden. Von dieser erfassten Beschleunigungsstörgröße kann dann abhängig von Geometriedaten und charakteristischen Daten der einzelnen Wägezellen auf die Auswirkung der erfassten Beschleunigungsstörgröße auch auf die jeweils anderen Wägezellen geschlossen werden.

Eine erfindungsgemäße Wägevorrichtung kann in einfacher Weise beispielsweise dadurch realisiert werden, dass sämtliche Wägezellen und vorzugsweise auch der wenigstens eine Beschleunigungssensor mechanisch starr mit einem Trägerelement verbunden sind, beispielsweise auf einer gemeinsamen starren Grundplatte angeordnet sind.

Wie üblich, wird man die Wägezellen vorzugsweise so anordnen, dass die Lasteinleitungsrichtungen oder Wirkrichtungen der Wägezellen im Wesentlichen parallel verlaufen.

Nach der bevorzugten Ausführungsform der Erfindung ist die Anzahl und die Art der Beschleunigungssensoren so festgelegt, dass sowohl eine in Richtung der Lasteinleitungsrichtung jeder Wägezelle existierende Komponente einer rein translatorischen Beschleunigungsstörgröße erfassbar und/oder bestimmbar ist als auch die in Richtung der Lasteinleitungsrichtung existierenden Komponenten rotatorischer Beschleunigungsstörgrößen, die durch eine ein- oder mehrachsige Rotationsstörbewegung der Wägezellen erzeugt werden.

Die Auswerteeinheit ist in diesem Fall vorzugsweise so ausgebildet, dass unter Verwendung einer vorgegebenen Vorschrift für jede Wägezelle aus den Störgrößensignalen der Beschleunigungssensoren abhängig vom geometrischen Ort der betreffenden Wägezelle in Bezug auf die geometrischen Orte der Beschleunigungssensoren jeweils eine Korrekturgröße ermittelt wird, welche den am geometrischen Ort betreffenden Wägezellen wirksamen Einfluss der Komponenten der Beschleunigungsstörgrößen in Richtung der Lasteinleitungsrichtung der betreffenden Wägezelle berücksichtigt. Das störgrößenbehaftete Gewichtssignal der betreffenden Wägezelle kann dann so mit der Korrekturgröße verknüpft oder rechnerisch verarbeitet werden, dass der Einfluss der Komponenten der Beschleunigungsstörgrößen in Richtung der Lasteinleitungsrichtung der betreffenden Wägezelle auf das Gewichtssignal im Wesentlichen kompensiert wird.

Nach einer weiteren Ausführungsform der Erfindung kann die Anzahl und die Art der Beschleunigungssensoren so festgelegt sein, dass zusätzlich zu den Beschleunigungskomponenten in Lasteinleitungsrichtung jeder Wägezelle am Ort jeder Wägezelle ein- oder mehrachsige rotatorische Beschleunigungsstörgrößen erfassbar und/oder bestimmbar sind, die sich auf das oder die Trägheitsmomente der Messmechanik der Wägezellen um entsprechende Achsen auswirken.

Wird auch der Einfluss von rotatorischen Beschleunigungsstörgrößen auf die Trägheitsmomente der Messmechanik der Wägezellen um entsprechende Achsen kompensiert, so ergibt sich eine weitere Verbesserung der Genauigkeit der Wägevorrichtung.

Die Auswerteeinheit ist in diesem Fall vorzugsweise so ausgebildet, dass unter Verwendung einer vorgegebenen Vorschrift für jede Wägezelle aus den Störgrößensignalen der Beschleunigungssensoren abhängig vom geometrischen Ort der betreffenden Wägezelle in Bezug auf die geometrischen Orte der Beschleunigungssensoren jeweils eine Korrekturgröße ermittelt wird, welche zusätzlich den am geometrischen Ort der betreffenden Wägezelle wirksamen Einfluss der ein- oder mehrachsigen rotatorischen Beschleunigungsstörgrößen auf das oder die Trägheitsmomente der Messmechanik der betreffenden Wägezelle um entsprechende Achsen berücksichtigt. Das störgrößenbehaftete Gewichtssignal der betreffenden Wägezelle kann dann wiederum mit dieser Korrekturgröße verknüpft oder rechnerisch verarbeitet werden, so dass der Einfluss der rotatorischen Beschleunigungsstörgrößen auf das Gewichtsignal im Wesentlichen kompensiert wird. Selbstverständlich können anstelle einer einzigen Auswerteeinheit auch mehrere Auswerteeinheiten oder sogar eine Auswerteeinheit pro Wägezelle vorgesehen sein, die eine Signalverarbeitung bewirken bzw. die einzige Auswerteeinheit kann als verteilt angeordnete Auswerteeinheit realisiert sein.

Nach einer einfach zu realisierenden Ausführungsform der Erfindung können mehrere Wägezellen auf einer Verbindungsgeraden x von zwei in einem vorbestimmten Abstand angeordneten, translatorischen Beschleunigungssensoren vorgesehen sein. Unter dem Begriff translatorischer Beschleunigungssensor sei dabei ein Beschleunigungssensor verstanden, dessen Sensorsignal die in einer Wirkrichtung oder Erfassungsrichtung des Beschleunigungssensors auftretenden Komponenten beliebiger Beschleunigungsstörgrößen widerspiegelt bzw. hierzu proportional ist. Dagegen erfasst ein rotatorischer Beschleunigungssensor eine rein rotatorische Störbeschleunigung um eine vorgegebene Achse (Wirkrichtung des rotatorischen Beschleunigungssensors).

Bei dieser einfachen Ausführungsform einer erfindungsgemäßen Wägevorrichtung kann mittels lediglich zweier translatorischer Beschleunigungssensoren der Einfluss von Beschleunigungsstörgrößen, die Komponenten in Richtung der Lasteinleitungsrichtung der Wägezellen aufweisen, auf einfache Weise rechnerisch ermittelt werden. In vielen Fällen wird man bereits mit lediglich zwei translatorischen Beschleunigungssensoren eine ausreichend genaue Korrektur der Gewichtssignale erreichen.

Nach einer bevorzugten Ausführungsform der Erfindung kann zusätzlich zu den beiden translatorischen Beschleunigungssensoren auf der Geraden, auf welcher auch die Wägezellen vorgesehen sind, ein weiterer translatorischer Beschleunigungssensor vorgesehen sein, der einen vorbestimmten Abstand von der Verbindungsgeraden aufweist. Bei dieser Ausführungsform ist es nicht zwingend notwendig, sämtliche Wägezellen auf einer Geraden mit den beiden ersten translatorischen Beschleunigungssensoren vorzusehen. Denn durch die Verwendung von drei translatorischen Beschleunigungssensoren kann auch der Einfluss von beliebigen Beschleunigungsstörgrößen, welche Komponenten in Richtung der Lasteinleitungsrichtung der Wägezellen aufweisen, an den Orten der einzelnen Wägezellen ermittelt werden. Durch die Platzierung der Wägezellen auf einer Linie mit zwei der translatorischen Beschleunigungssensoren lässt sich jedoch eine einfache rechnerische Korrektur de Wägesignale erzielen.

Wird der weitere translatorische Beschleunigungssensor auf einer Mittelsenkrechten auf den Abstand zwischen den beiden ersten translatorischen Beschleunigungssensoren angeordnet, so lässt sich auch eine einfache Korrektur des Einflusses einer einzigen rotatorischen Beschleunigungsstörgröße ermitteln, nämlich derjenigen rotatorischen Beschleunigungsstörgröße, deren Achse parallel zur Geraden liegt, auf der die Wägezellen angeordnet sind. Grundsätzlich lässt sich jedoch selbstverständlich mit Hilfe von drei translatorischen Beschleunigungsssensoren auch der Einfluss von rotatorischen Störbeschleunigungen erfassen, deren Achse parallel zur Ebene liegt, welche durch die drei translatorischen Beschleunigungssensoren aufgespannt wird.

Eine weitere Vereinfachung der Korrektur und eine Verbesserung der Genauigkeit kann dadurch erreicht werden, dass die Wägezellen so ausgebildet und angeordnet sind, dass die Messmechanik eine rotatorische Schwingungsempfindlichkeit im Wesentlichen nur um eine Achse parallel zur Geraden aufweist, auf welcher die Wägezellen angeordnet sind.

Bei der Ausführungsform mit drei Beschleunigungssensoren, wobei die Wägezellen auf der Verbindungsgeraden zweier der Beschleunigungssensoren liegen und der dritte Beschleunigungssensor auf der Mittelsenkrechten auf den Abstand zwischen den beiden ersten Beschleunigungssensoren liegt, lässt sich eine sehr einfache rechnerische Kompensation des Einflusses sowohl von rotatorischen Störbeschleunigungen als auch eine sehr einfache rechnerische Korrektur des Einflusses von translatorischen Störbeschleunigungen in Richtung der Lasteinleitungsrichtung der Wägezellen erreichen.

Nach einer Ausführungsform der Erfindung können als Beschleunigungssensoren, insbesondere translatorische Beschleunigungssensoren kapazitive Beschleunigungssensoren verwendet werden, bei denen die Auslenkung einer seismischen Masse aus einer Ausgangslage kapazitiv erfasst und die seismische Masse durch die Erzeugung einer elektrostatischen Kraft unter Verwendung eines geschlossenen Regelkreises wieder in die Ausgangslage zurückgestellt wird, wobei die hierzu nötige Rückstellkraft ein Maß für die erfasste Beschleunigung darstellt.

Diese Beschleunigungssensoren weisen selbst bei hoher Auflösung ein sehr geringes Rauschen auf. Des Weiteren tritt bei diesen Sensoren bis zu Frequenzen weit oberhalb von 100 Hz keine Phasenverschiebung auf. Hierdurch wird es einfacher, Filter zu entwerfen, die den Frequenzgang der Sensoren an den Frequenzgang der Wägezellen anpassen, da der Frequenzgang dieser Sensoren im interessierenden Bereich konstant ist..

Derartige kapazitive Beschleunigungssensoren lassen sich selbstverständlich nicht nur bei Wägevorrichtungen mit mehreren Wägezellen nach der vorliegenden Erfindung einsetzen. Vielmehr können ein oder mehrere derartige kapazitive Beschleunigungssensoren auch zur Erfassung von Störbeschleunigungen bei Wägevorrichtungen mit einer einzigen Wägezelle verwendet werden. Die Sensoren können dabei, wie an sich bekannt, sowohl starr mit der Wägezelle mechanisch verbunden sein, als auch an einem beweglichen Element der Messmechanik der Wägezelle vorgesehen sein.

Weitere Ausführungsformen der Erfindung ergeben sich aus den Unteransprüchen. Die Erfindung wird nachfolgend anhand eines in der Zeichnung dargestellten Ausführungsbeispiels näher erläutert. In der Zeichnung zeigen

Fig. 1    eine schematische Darstellung einer Mehrspur-Wägevomchtung nach der vorliegenden Erfindung mit zwei translatorischen Beschleunigungssensoren;

Fig. 2    ein schematisches Blockschaltbild zur Darstellung der Signalverknüpfung zur der Korrektur der Gewichtssignale der Vorrichtung in Fig. 1;

Fig. 3     eine schematische Darstellung einer weiteren Ausführungsform einer Mehrspur-Wägevorrichtung nach der Erfindung mit drei Beschleunigungssensoren in Draufsicht und

Fig. 4     ein schematisches Blockschaltbild zur Darstellung der Verknüpfung der einzelnen Signale zur Korrektur der Gewichtssignale der Mehrspur-Wägevorrichtung in Fig. 3.

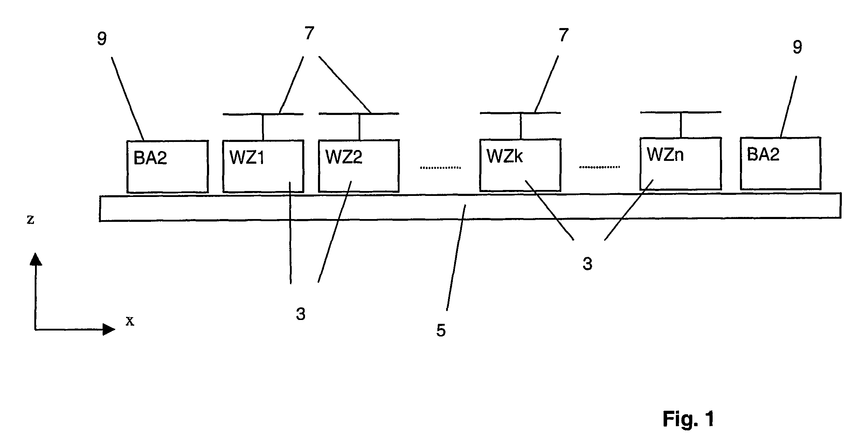

Die in Fig. 1 in einer Frontansicht schematisch dargestellte Wägevorrichtung 1 umfasst mehrere Wägezellen 3, die auch mit dem Kürzel WZ gekennzeichnet sind. Die Wägezellen 3 sind entlang einer Linie oder Geraden auf einer starren Trägerplatte 5 angeordnet. Zur Beschreibung der Geometrie der Wägevorrichtung 1 wurde in Fig. 1 das ebenfalls dargestellte kartesische Koordinatensystem gewählt. In diesem Koordinatensystem verläuft die Linie, entlang der die Wägezellen 3, vorzugsweise in äquidistanten Abständen, angeordnet sind in Richtung der x-Achse. Die Krafteinleitungsrichtung, in welcher eine Last (nicht dargestellt) die Gewichtskraft auf jeweils einen Lastaufnehmer 7 der Wägezellen 3 ausübt, verläuft in Richtung der z-Achse des Koordinatensystems.

Zur Korrektur von Einflüssen von Beschleunigungsstörgrößen, welche Komponenten in Richtung der z-Achse der Wägezellen 3 aufweisen, sind bei der in Fig. 1 dargestellten Wägevorrichtung 1 lediglich zwei translatorische Beschleunigungsaufnehmer oder Beschleunigungssensoren 9 angeordnet. Die Beschleunigungssensoren sind auch mit den Bezeichnungen BA1 und BA2 versehen.

Zur Kompensation der vorgenannten Beschleunigungsstörgrößen wurden die Beschleunigungssensoren 9 auf derselben Linie angeordnet, auf der auch die Wägezellen 3 positioniert sind. Im dargestellten Ausführungsbeispiel wurden die Beschleunigungssensoren 9 jeweils an einem Ende der Kette von Wägezellen 3 positioniert. Durch den relativ großen Abstand der beiden Beschleunigungssensoren 9 ergibt sich eine wunschgemäß hohe Genauigkeit bei der Berechnung der Korrekturfaktoren, wie sie im Folgenden erläutert wird.

Die Auswirkung von Beschleunigungsstörgrößen, welche Komponenten in Richtung der z-Achse aufweisen auf die Signale der einzelnen Wägezellen kann infolge der bekannten Geometrie der Wägevorrichtung 1 berücksichtigt werden. Die üblicherweise (im strengen Sinn inkorrekt) in Kilogramm angegebene Gewichtskraft $G_k(t)$ einer Wägezelle an der Position k, welche durch Beschleunigungskomponenten $\ddot{z}_k(t)$ verfälscht bzw. überlagert ist, lässt sich durch die Beziehung

$$G_k(t) = m_k(t) + (m_k(t) + m_{VLk}) \cdot \frac{\ddot{z}_k(t)}{g} \qquad (I)$$

beschreiben. Dabei bedeutet $m_k$ die Masse der Last, die sich auf dem Lastaufnehmer 7 der Wägezelle an der Position k befindet, und $m_{VLk}$ berücksichtigt den Einfluss einer auf der Wägezelle gegebenenfalls montierten Vorlast und die für die Beschleunigung wirksamen Eigenmassen der Wägezellenmechanik. Die Gravitationskonstante (Erdbeschleunigung) ist mit g bezeichnet.

Für die Geometrie dieser speziellen Anordnung kann die Beschleunigung in z-Richtung $\ddot{z}_k(t)$ aus den an den beiden Orten $x_{BA1}$ und $x_{BA2}$ der beiden translatorischen Beschleunigungssensoren 9 bzw. BA1 und BA2 erfassten Beschleunigungen $\ddot{z}_{BA1}(t)$ und $\ddot{z}_{BA2}(t)$ durch die nachstehende Beziehung berechnet werden:

$$\ddot{z}_k(t) = \ddot{z}_{BA1}(t) \cdot \frac{x_{BA2} - x_{WZk}}{x_{BA2} - x_{BA1}} + \ddot{z}_{BA2}(t) \cdot \frac{x_{WZk} - x_{BA1}}{x_{BA2} - x_{BA1}} \qquad (II)$$

In dieser Beziehung ist der geometrische Ort der Wägezelle an der Position k mit $x_{wzk}$ bezeichnet.

Bei dieser speziellen Geometrie der Anordnung sämtlicher Wägezellen 3 und der beiden translatorischen Beschleunigungssensoren 9 auf einer Geraden lassen sich sämtliche Komponenten beliebiger Beschleunigungsstörgrößen in Richtung der Lasteinleitungsrichtung der Wägezellen mit lediglich zwei translatorischen Beschleunigungssensoren ermitteln und korrigieren.

An dieser Stelle sei bemerkt, dass unter einem translatorischen Beschleunigungssensor ein Beschleunigungssensor verstanden wird, der Beschleunigung in einer vorgegebenen Wirkrichtung erfassen kann. Die Wirkrichtung der Beschleunigungssensoren 9 bei der Ausführungsform in Fig. 1 ist demzufolge in Richtung der z-Achse des gewählten Koordinatensystems vorzusehen, d.h. parallel zur Lasteinleitungsrichtung der Wägezellen 3.

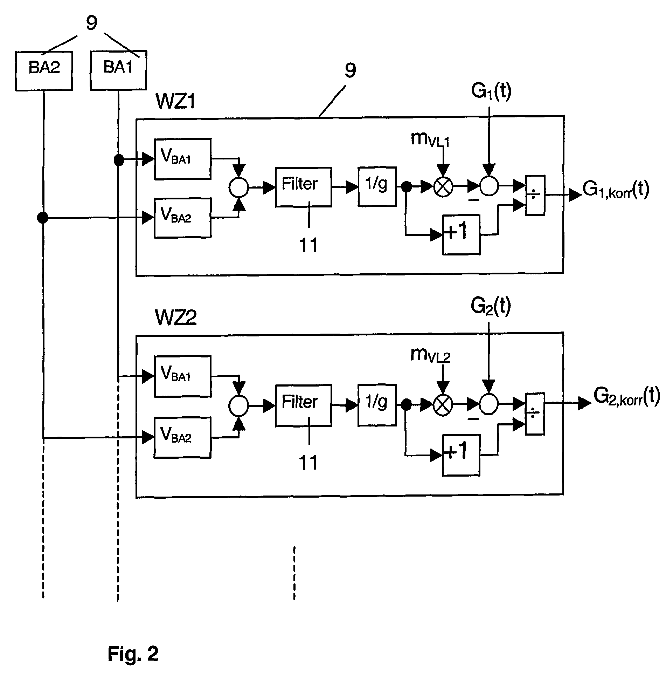

Zur Kompensation des Einflusses der Beschleunigungsstörgrößen mit Komponenten in z-Richtung muss von der vom eigentlichen Kraftaufnehmer jeder Wägezelle 3 erzeugten, fehlerbehafteten Gewichtssignal $G_k(t)$ der zweite Teilterm der vorstehenden Gleichung I, welcher durch das Produkt mit der ermittelten Störbeschleunigung $\ddot{z}_k$ beschrieben ist, subtrahiert werden. Der betreffende schematische Signalverlauf ist in dem in Fig. 2 dargestellten Blockschaltbild gezeigt. Aus Gründen der Einfachheit ist dabei lediglich der Signalverlauf für die beiden ersten Wägezellen 3 WZ1 und WZ2 dargestellt.

Die beiden von den translatorischen Beschleunigungsaufnehmern 3 bzw. BA1 und BA2 erzeugten Beschleunigungssignale sind der erfassten Störbeschleunigung in z-Richtung proportional. Diese Signale werden für jede Wägezelle 3, jeweils einem Verstärker $V_{BA1}$ bzw. $V_{BA2}$ zugeführt. Hier werden die beiden Signale jeweils mit dem aus Gleichung II ersichtlichen Faktor beaufschlagt. Gleichzeitig werden mittels der Verstärker $V_{BA1}$ und $V_{BA2}$ die Empfindlichkeiten der beiden Beschleunigungssensoren BA1 und BA2 an die Empfindlichkeit der Wägezelle angepasst, welche das fehlerbeaufschlagte Gewichtssignal $G_k(t)$ liefert. Die am Ausgang jedes Verstärkers $V_{BA1}$ und $V_{BA2}$ anliegenden Signale, welche jeweils einem Summanden der vorstehenden Gleichung II entsprechen, werden dieser Gleichung entsprechend addiert. Dieses Signal wird einem Filter 11 zugeführt, welcher die Frequenzgänge der beiden Beschleunigungssensoren an den Frequenzgang der Wägezelle anpasst, um eine phasenrichtige Verknüpfung dieser Signale zu gewährleisten. Anschließend wird das Ausgangssignal des Filters 11 mit dem Faktor l/g einer entsprechenden Multiplikatoreinheit beaufschlagt. Selbstverständlich kann diese Multiplikation jedoch auch im betreffenden Filter 11 integriert sein. Das Produkt des Ausgangssignals der Multiplikatoreinheit mit der Masse $m_{VLk}$ wird vom fehlerbehafteten Gewichtssignal $G_k(t)$ subtrahiert. Anschließend wird dieses Ergebnis durch das um eins erhöhte Ausgangssignal der Multiplikatoreinheit dividiert. Dieses korrigierte Gewichtssignal $G_{k,korr}(t)$ kann dann einer Anzeigeeinheit und/oder einer weiteren Datenverarbeitungseinheit zugeführt werden.

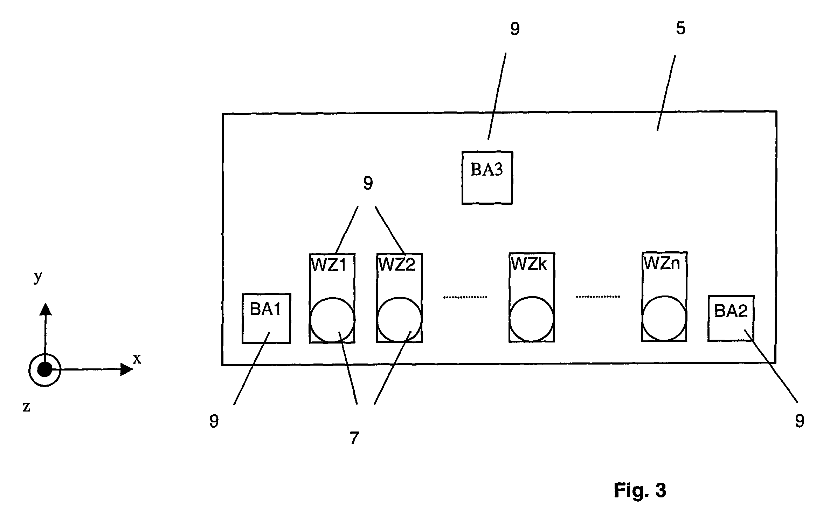

In Fig. 3 ist eine weitere Ausführungsform einer Mehrspur-Wägevorrichtung dargestellt, welche weitestgehend mit der Ausführungsform nach Fig. 1 übereinstimmt. Zusätzlich ist jedoch ein weiterer Beschleunigungssensor 9 vorgesehen, der auch mit BA3 bezeichnet ist.

Diese Ausführungsform erlaubt es auch rotatorische Beschleunigungen der Trägerplatte 5 und damit der Wägezellen 3 zu erfassen und zu korrigieren. Mit den drei translatorischen Beschleunigungssensoren, die jeweils eine Wirkrichtung in Richtung der Lasteinleitungsrichtung der Wägezellen 3 aufweisen, lassen sich theoretisch sämtliche Beschleunigungsstörgrößen erfassen, die eine Komponente in Richtung der z-Achse aufweisen sowie eine zweiachsige rotatorische Beschleunigung der Trägerplatte 5 und damit der Wägezellen 3. Die beiden Achsen der rotatorischen Beschleunigung liegen dabei parallel zur Ebene bzw. in der Ebene der Trägerplatte 5 bzw. der Ebene, in welcher die Wägezellen 3 angeordnet sind (bzw. in einer Ebene senkrecht zur Lasteinleitungsrichtung der Wägezellen 3). Es lässt sich somit eine beliebige Taumelbewegung der Trägerplatte 5 und der darauf angeordneten Wägezellen 3 erfassen.

Im Folgenden wird davon ausgegangen, dass die Wägezellen 3 so aufgebaut sind, dass sie lediglich eine Empfindlichkeit hinsichtlich Drehschwingungen bzw. rotatorischen Störbeschleunigungen um eine Achse parallel zur x-Achse aufweisen. Dies ist beispielsweise bei Kompensationswaagen der Fall, deren Hebelmechanik ausschließlich Drehpunkte für die Hebel um Achsen parallel zur x-Achse aufweist. Werden die Wägezellen 3 so angeordnet, dass die Drehachsen der Hebelmechanik parallel zur x-Achse verlaufen, so kann sich nur eine rotatorische Beschleunigungsstörgröße verfälschend auf das Messergebnis auswirken, die zumindest eine Komponente einer rotatorischen Störbeschleunigung um diese Achse bewirkt.

Für eine Anordnung des weiteren Beschleunigungssensors BA3 auf der Mittelsenkrechten zwischen der Verbindungsgeraden der Beschleunigungssensoren BA1 und BA2 ergeben sich für die Geometrie gemäß Fig. 3 die folgenden Beziehungen:

$$G_k(t) = m_k(t) + (m_k(t) + m_{VLk}) \cdot \frac{\ddot{z}_k(t)}{g} + k_k \cdot \ddot{\varphi}_{xk}(t) \qquad \text{(III)}$$

Diese Beziehung entspricht der oben erläuterten Gleichung I, wurde jedoch zur Berücksichtigung der rotatorischen Störbeschleunigung um eine Achse parallel zur x-Achse um den letzten Teilterm erweitert, wobei mit $k_k$ die rotatorische Empfindlichkeit der Messmechanik der Wägezelle an der Position k um eine Achse parallel zur x-Achse bezeichnet ist und mit $\ddot{\varphi}_{xk}(t)$ die rotatorische Störbeschleunigung um diese Achse.

Die translatorische Störbeschleunigung $\ddot{z}_k(t)$ ist wiederum nach der vorstehend erläuterten Gleichung II zu ermitteln.

Die rotatorische Störbeschleunigung $\ddot{\varphi}_{xk}(t)$ ergibt sich für die in Fig. 3 gewählte Geometrie durch die Beziehung

$$\ddot{\varphi}_{xk}(t) = \frac{\ddot{z}_{BA3}(t) - \frac{1}{2}\ddot{z}_{BA1}(t) - \frac{1}{2}\ddot{z}_{BA2}(t)}{y_{BA3} - \frac{1}{2}y_{BA1} - \frac{1}{2}y_{BA2}} \qquad \text{IV)}$$

In dieser Beziehung sind mit $\ddot{z}_{BA1}(t)$ und $\ddot{z}_{BA2}(t)$ und mit $\ddot{z}_{BA3}(t)$ die Messsignale der beiden translatorischen Beschleunigungssensoren BA1 und BA2 und des weiteren translatorischen Beschleunigungssensors BA3 bezeichnet. $y_{BA1}$, $y_{BA2}$ und $y_{BA3}$ bedeuten die geometrischen Orte der translatorischen Beschleunigungssensoren in einer Richtung senkrecht zur x-Achse bzw. in Richtung der y-Achse.

Selbstverständlich kann die gewählte Geometrie auch komplizierter gewähtl werden, als dies in Fig. 3 gezeigt ist. Speziell diese Geometrie führt jedoch zu relativ einfachen Beziehungen für diejenigen Größen, die zur Korrektur des fehlerbehafteten Gewichtssignals der Messzellen 3 benötigt werden.

Generell liegt der vorliegenden Erfindung jedoch das Prinzip zugrunde, ausgehend von einer vorgewählten Anzahl und Art von Beschleunigungssensoren die mechanisch starr mit den untereinander ebenfalls starr verbundenen Wägezellen verbunden sind, die Sensorsignale unter Berücksichtigung der Geometrie so auszuwerten, dass die jeweils interessierende Störbeschleunigung bzw. deren Komponenten am Ort jeder einzelnen Wägezelle ermittelt und zur Korrektur des fehlerbehafteten Gewichtssignals der betreffenden Wägezelle verwendet wird.

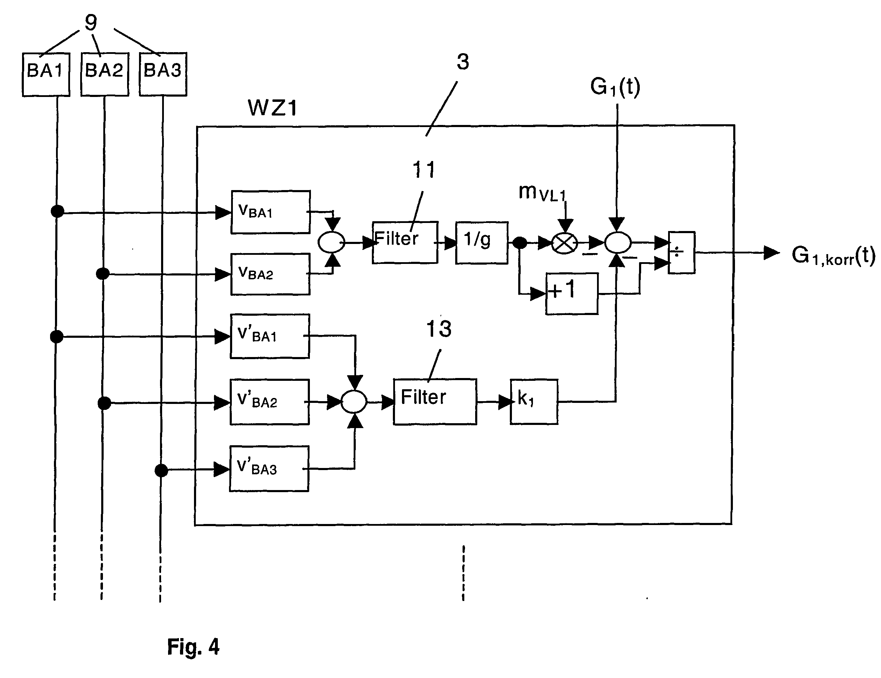

In Fig. 4 ist wiederum der Signalverlauf zur Erzeugung eines korrigierten Gewichtssignals $G_{k,korr}(t)$ der einzelnen Wägezellen 3 unter Verwendung der Signal der drei translatorischen Beschleunigungssensoren BA1, BA2 und BA3 (aus Gründen der Einfachheit lediglich für die erste Wägezelle 3 WZ1) dargestellt.

Für die Erzeugung des der translatorischen Beschleunigung in z-Richtung entsprechenden Signals, normiert auf die Erdbeschleunigung, welches am Ausgang des Filters 11 anliegt sei auf die vorstehenden Erläuterungen in Verbindung mit Fig. 2 verwiesen. Die rotatorische Beschleunigung gemäß der vorstehenden Gleichung IV wird aus den Signalen aller drei translatorischen Beschleunigungssensoren 9 ermittelt, wobei jedes Signal dieser Sensoren mit einem Verstärker $V'_{BA1}$, $V'_{BA2}$ und $V'_{BA3}$ beaufschlagt wird. Die Verstärker passen dabei die Empfindlichkeit der Beschleunigungssensoren an die Empfindlichkeit der jeweiligen Wägezelle 3 an und berücksichtigen gleichzeig die Faktoren 1/2 in Gleichung IV. Die Signale am Ausgang der Verstärker $V'_{BA1}$, $V'_{BA2}$ und $V'_{BA3}$ werden vorzeichenrichtig addiert und einem weiteren Filter 13 zugeführt.

Zur Erzeugung eines korrigierten Gewichtssignals $G_{k,korr}(t)$, welches der Masse $m_k(t)$ in Gleichung III entspricht, wird, wie dies aus einer Auflösung von Gleichung III nach der Größe $m_k(t)$ ersichtlich ist, vom fehlerbehafteten Gewichtssignal $G_k(t)$ der Wägezelle an der Position 1 das Signal am Ausgang des Filters 13, beaufschlagt mit dem Faktor $k_k$ subtrahiert. Der Filter 13 passt wiederum den Frequenzgang der Beschleunigungssensoren BA1, BA2, BA3 an den Frequenzgang der betreffenden Wägezelle WZk an der Position k an. Bei der Verwendung von unterschiedlichen Beschleunigungssensoren kann diese Frequenzganganpassung selbstverständlich auch in die jeweiligen Verstärker integriert sein und für jeden Beschleunigungssensor separat vorgenommen werden. Des Weiteren kann der Filter 13 die Beaufschlagung der rotatorischen Störbeschleunigung um die x-Achse mit der rotatorischen Empfindlichkeit $k_k$ der Wägezelle WZk an der Position k beinhalten, welche in Fig. 4 mittels einer separat dargestellten Multiplikationseinheit bewirkt wird. Des Weiteren wird vom fehlerbehafteten Signal $G_k(t)$ auch das Produkt des Ausgangs des Filters 11 mit der Masse $m_{VLk}$ und dem Faktor 1/g subtrahiert. Dieses Ergebnis wird wiederum dividiert durch das um eins erhöhte Ausgangssignal des Filters 11.

Aus Gründen der Übersichtlichkei zeigt Fig. 4 diesen Signallauf nur für die Wägezelle WZ1 an der Position 1. Bei identischen Wägezellen kann für jede Wägezelle ein Block mit dem identischen Signallaufplan verwendet werden. Bei unterschiedlichen Wägezellen müssen gegebenenfalls unterschiedliche Parameter wie unterschiedliche Empfindlichkeiten der Wägezellen, unterschiedliche Frequenzgänge und unterschiedliche rotatorische Empfindlichkeiten berücksichtigt werden.

Selbstverständlich ist es nicht erforderlich, eine entsprechende Anzahl von Hardware-Schaltungen vorzusehen, die jeweils den Signallauf, der in Fig. 3 für die Wägezelle WZ1 dargestellt ist, für jede Wägezelle separat realisieren. Vielmehr können die Signale der Beschleunigungssensoren und die fehlerbehafteten Signale der Wägezellen auch digitalisiert und einer zentralen Auswerteeinheit zugeführt sein, die im Wesentlichen aus einem Controller besteht, der auch als selbstständiger Rechner ausgebildet sein kann. Der Controller kann dann aus den ihm bekannten Vorschriften der vorstehenden Gleichungen die erforderlichen Berechnungen vornehmen und das korrigierte Gewichtssignal in digitaler Form oder, wieder digital-analog gewandelt, in analoger Form ausgeben. Selbstverständlich können auch mehrere Auswerteeinheiten vorgesehen sein, die jeweils die fehlerbehafteten Gewichtssignale einer Gruppe von Wägezellen 3 korrigieren.

**Patentansprüche**

1. Wägevorrichtung

   (a) mit mehreren, mechanisch miteinander starr verbundenen Wägezellen (3), welche jeweils einen mit einer Last beaufschlagbaren Lastaufnehmer (7) mit einer vorgegebenen Lasteinleitungsrichtung aufweisen,
   (b) mit wenigstens einem Beschleunigungssensor (9) zur Erfassung wenigstens einer Beschleunigungsstörgröße und
   (c) mit wenigstens einer Auswerteeinheit, welcher die von den Wägezellen (3) erzeugten Gewichtssignale und die von den Beschleunigungssensoren (9) erzeugten Störgrößensignale zugeführt werden,
   **dadurch gekennzeichnet, dass**
   (d) die wenigstens eine Auswerteeinheit so ausgebildet ist,

   (i) dass sie für jede Wägezelle (3) aus dem Störgrößensignal des wenigstens einen Beschleunigungssensors (9) abhängig vom geometrischem Ort der betreffenden Wägezelle (3) in Bezug auf den geometrischen Ort des wenigstens einen Beschleunigungssensors (9) jeweils eine Korrekturgröße ermittelt, welche den am geometrischen Ort der betreffenden Wägezelle (3) wirksamen Einfluss der wenigstens einen Beschleunigungsstörgröße berücksichtigt, und
   (ii) dass sie das mit der wenigstens einen Beschleunigungsstörgöße behaftete Gewichtssignal der betreffenden Wägezelle (3) so mit der Korrekturgröße verknüpft oder rechnerisch verarbeitet, dass der Einfluss der wenigstens einen Beschleunigungsstörgröße auf das Gewichtssignal im Wesentlichen kompensiert wird.

2. Wägevorrichtung nach Anspruch 1, **dadurch gekennzeichnet, dass** der wenigstens eine Beschleunigungssensor (9) starr mit den Wägezellen (3) verbunden ist.

3. Wägevorrichtung nach Anspruch 1 oder 2, **dadurch gekennzeichnet, dass** die Wägezellen (3) und vorzugsweise auch der wenigstens eine Beschleunigungssensor (9) mechanisch starr mit einem starren Trägerelement (5), beispielsweise einer gemeinsamen starren Grundplatte, verbunden sind.

4. Wägevorrichtung nach einem der vorhergehenden Ansprüche, **dadurch gekennzeichnet, dass** die Lasteinleitungsrichtungen der Wägezellen (3) im Wesentlichen parallel verlaufe.

5. Wägevorrichtung nach einem der vorhergehenden Ansprüche, **dadurch gekennzeichnet, dass** die Anzahl und Art der Beschleunigungssensoren (9) so festgelegt ist, dass sowohl eine in Richtung der Lasteinleitungsrichtung jeder Wägezelle (3) existierende Komponente einer rein translatorischen Beschleunigungsstörgröße erfassbar und/ oder bestimmbar ist als auch die in Richtung der Lasteinleitungsrichtung existierenden Komponenten rotatorischer Beschleunigungsstörgrößen, die durch eine ein- oder mehrachsige Rotationsstörbewegung der Wägezellen (3) erzeugt werden.

6. Wägevorrichtung nach Anspruch 5, **dadurch gekennzeichnet, dass** die wenigstens eine Auswerteeinheit so ausgebildet ist,

   (a) dass sie für jede Wägezelle (3) aus den Störgrößensignalen der Beschleunigungssensoren (9) abhängig vom geometrischem Ort der betreffenden Wägezelle (3) in Bezug auf die geometrischen Orte der Beschleunigungssensoren (9) jeweils eine Korrekturgröße ermittelt, welche den am geometrischen Ort der betreffenden Wägezelle (3) wirksamen Einfluss der Komponenten der Beschleunigungsstörgrößen in Richtung der Lasteinleitungsrichtung der betreffenden Wägezelle (3) berücksichtigt, und
   (b) dass sie das störgrößenbehaftete Gewichtssignal der betreffenden Wägezelle (3) so mit der Korrekturgröße verknüpft oder rechnerisch verarbeitet, dass der Einfluss der Komponenten der Beschleunigungsstörgrößen in Richtung der Lasteinleitungsrichtung der betreffenden Wägezelle (3) auf das Gewichtssignal im Wesentlichen kompensiert wird.

7. Wägevorrichtung Anspruch 5 oder 6, **dadurch gekennzeichnet, dass** Anzahl und Art der Beschleunigungssensoren (9) so festgelegt ist, dass zusätzlich zu den Beschleunigungskomponenten in Lasteinleitungsrichtung jeder Wägezelle (3) am Ort jeder Wägezelle ein- oder mehrachsige rotatorische Beschleunigungsstörgrößen erfassbar und/oder bestimmbar sind, die sich auf das oder die Trägheitsmomente der gegenüber einem ortsfesten Grundkörper beweglichen Teile der Wägezellen (3) um entsprechende Achsen auswirken.

8. Wägevorrichtung nach Anspruch 7, **dadurch gekennzeichnet, dass** die wenigstens eine Auswerteeinheit so ausgebildet ist,

(a) dass sie für jede Wägezelle (3) aus den Störgrößensignalen der Beschleunigungssensoren (9) abhängig vom geometrischem Ort der betreffende Wägezelle (3) in Bezug auf die geometrischen Orte der Beschleunigungssensoren (9) jeweils eine Korrekturgröße ermittelt, welche zusätzlich den am geometrischen Ort der betreffenden Wägezelle (3) wirksamen Einfluss der ein- oder mehrachsigen rotatorischen Beschleunigungsstörgrößen auf das oder die Trägheitsmomente der Messmechanik der betreffenden Wägezelle (3) um entsprechende Achsen berücksichtigt, und

(b) dass sie das störgrößenbehaftete Gewichtssignal der betreffenden Wägezelle (3) so mit der Korrekturgröße verknüpft oder rechnerisch verarbeitet, dass der Einfluss der rotatorischen Beschleunuigungsstörgrößen auf das Gewichtssignal im Wesentlichen kompensiert wird.

9. Wägevorrichtung nach Anspruch 5 und 6, **dadurch gekennzeichnet, dass** zwei in einem vorbestimmten Abstand angeordnete, translatorische Beschleunigungssensoren (9) vorgesehen sind, und dass die Wägezellen (3) auf der Verbindungsgeraden der beiden translatorischen Beschleunigungssensoren angeordnet sind.

10. Wägevorrichtung nach Anspruch 9, **dadurch gekennzeichnet, dass** die wenigstens eine Auswerteeinheit das Gewichtssignal $G_k(t)$ einer Wägezelle (3) auf der Position k nach der Beziehung

$$G_k(t) = m_k(t) + (m_k(t) + m_{VLk}) \cdot \frac{\ddot{z}_k(t)}{g}$$

vermittelt, wobei mit $m_k(t)$ die Masse der Last auf der Wägezelle (3), mit $m_{VLk}$ die Eigenmasse der relevanten bewegten Masse der Messmechanik und die Masse einer optionalen Vorlast an der Wägezelle(3) an der Position k, mit die gesamte translatorische Störbeschleunigung $\ddot{z}_k(t)$ in Erfassungsrichtung der Wägezelle (3) am Ort der Wägezelle (3) und mit g die Erdbeschleunigung bezeichnet ist, und dass die Wägezelle (3) die translatorische Störbcschleunigung nach der Beziehung

$$\ddot{z}_k(t) = \ddot{z}_{BA1}(t) \cdot \frac{x_{BA2} - x_{WZk}}{x_{BA2} - x_{BA1}} + \ddot{z}_{BA2}(t) \cdot \frac{x_{WZk} - x_{BA1}}{x_{BA2} - x_{BA1}}$$

ermittelt, wobei mit $\ddot{z}_{BA1}(t)$ und $\ddot{z}_{BA2}(t)$ die Messsignale der beiden translatorischen Beschleunigungssensoren (9) bezeichnet sind und mit $x_{BA1}$, $x_{BA2}$, $x_{WZk}$ die geometrischen Orte der beiden translatorischen Beschleunigungssensoren und der betreffenden Wägezelle (3) auf der Geraden.

11. Wägevorrichtung nach Anspruch 9, **dadurch gekennzeichnet, dass** zusätzlich mindestens ein weiterer translatorischer Beschleunigungssensor (9) vorgesehen ist, der einen vorbestimmten Abstand von der Verbindungsgeraden aufweist.

12. Wägevorrichtung nach Anspruch 11, **dadurch gekennzeichnet, dass** der mindestens eine weitere translatorische Beschleunigungssensor (9) auf einer Mittelsenkrechten auf den Abstand zwischen den beiden translatorischen Beschleunigungssensoren (9) angeordnet ist.

13. Wägevorrichtung nach Anspruch 11 oder 12, **dadurch gekennzeichnet, dass** die Wägezellen (3) so ausgebildet und angeordnet sind, dass die Mcssmcchanik eine rotatorische Schwingungsempfindlichkeit im Wesentlichen nur um eine Achse parallel zur Geraden x aufweist, auf der die Wägezellen (3) angeordnet sind.

14. Wägevorrichtung nach Anspruch 13, **dadurch gekennzeichnet, dass** die wenigstens eine Auswerteeinheit das Gewichtssignal $G_k(t)$ einer Wägezelle (3) an der Position k nach der Beziehung

$$G_k(t) = \dot{m}_k(t) + (m_k(t) + m_{VLk}) \cdot \frac{\ddot{z}_{WZk}(t)}{g} + k_k \cdot \ddot{\varphi}_{xk}(t)$$

ermittelt, wobei mit $m_k(t)$ die Masse der Last auf der Wägezelle, mit $m_{VLk}$ die Eigenmasse der relevanten bewegten Masse der Messmechanik und die Masse einer optionalen Vorlast der Wägezelle (3), mit die gesamte translatorische Störbeschleunigung $\ddot{z}_k(t)$ in Erfassungsrichtung der Wägezelle (3) am Ort dieser Wägezelle, mit g die Erdbeschleunigung, mit $k_k$ die rotatorische Empfindlichkeit der Messmechanik der Wägezelle (3) am Ort k um eine Gerade parallel zur Verbindungsgeraden und mit $\ddot{\varphi}_{xk}(t)$ die rotatorische Störbeschleunigung um diese Achse bezeichnet ist, dass die wenigstens eine Auswerteeinheit die translatorische Störbeschleunigung nach der Beziehung

$$\ddot{z}_k(t) = \ddot{z}_{BA1}(t) \cdot \frac{x_{BA2} - x_{WZk}}{x_{BA2} - x_{BA1}} + \ddot{z}_{BA2}(t) \cdot \frac{x_{WZk} - x_{BA1}}{x_{BA2} - x_{BA1}}$$

ermittelt, wobei mit $\ddot{z}_{BA1}(t)$ und $\ddot{z}_{BA2}(t)$ die Messsignale der beiden translatorischen Beschleunigungssensoren (9) bezeichnet sind und mit $x_{BA1}$, $x_{BA2}$, $x_{WZK}$ die geometrischen Orte der beiden translatorischen Beschleunigungs-Sensoren (9) und der betreffenden Wägezelle (3) auf der Geraden, und dass die wenigstens eine Auswerteeinheit die rotatorischen Störbeschleunigung $\ddot{\varphi}_{xk}(t)$ nach der Beziehung

$$\ddot{\varphi}_{xk}(t) = \frac{\ddot{z}_{BA3}(t) - \frac{1}{2}\ddot{z}_{BA1}(t) - \frac{1}{2}\ddot{z}_{BA2}(t)}{y_{BA3} - \frac{1}{2}y_{BA1} - \frac{1}{2}y_{BA2}}$$

ermittelt, wobei mit $\ddot{z}_{BA1}(t)$, $\ddot{z}_{BA2}(t)$ und $\ddot{z}_{BA3}(t)$ die Messsignale der beiden translatorischen Beschleunigungssensoren (9) und des weiteren translatorischen Beschleunigungssensors (9) bezeichnet sind und mit $y_{BA1}$, $y_{BA2}$ und $y_{BA3}$ die geometrischen Orte der translatorischen Beschleunigungssensoren (9) in einer Richtung senkrecht zur Geraden x.

**15.** Wägevorrichtung nach einem der vorhergehenden Ansprüche, **dadurch gekennzeichnet, dass** die Beschleunigungssensoren (9) als kapazitive Beschlcunigungssensoren ausgebildet sind, wobei die Auslenkung einer seismischen Masse aus einer Ausgangslage kapazitiv erfasst und die seismische Masse durch die Erzeugung einer elektrostatischen Kraft unter Verwendung eines geschlossenen Regelkreises wieder in die Ausgangslage rückgestellt wird, wobei die hierzu nötige Rückstellkraft ein Maß für die erfasste Beschleunigung darstellt.

**16.** Wägevorrichtung nach einem der vorhergehenden Ansprüche, **dadurch gekennzeichnet, dass** pro Wägezelle eine Auswerteeinheit vorgesehen ist oder dass für jeweils eine Gruppe von Wägezellen jeweils eine Auswerteeinheit vorgesehen ist.

**Claims**

**1.** Weighing device

   (a) with multiple weighing cells (3) which are mechanically rigidly joined to each other, and which each have a load carrier (7) to which a load can be applied, with a predetermined load insertion direction,
   (b) with at least one acceleration sensor (9) to capture at least one acceleration disturbance magnitude, and
   (c) with at least one evaluation unit, to which the weight signals generated by the weighing cells (3) and the disturbance magnitude signals generated by the acceleration sensors (9) are fed,
   **characterized in that**
   (d) the at least one evaluation unit is in such a form that

(i) for every weighing cell (3), from the disturbance magnitude signal of the at least one acceleration sensor (9), depending on the geometrical location of the relevant weighing cell (3) in relation to the geometrical location of the at least one acceleration sensor (9), it determines a correction magnitude, which takes account of the effect (which is effective at the geometrical location of the relevant weighing cell (3)) of the at least one acceleration disturbance magnitude,

(ii) it links the weight signal (which is affected by the at least one acceleration disturbance magnitude) of the relevant weighing cell (3) to the correction magnitude, or processes it computationally, in such a way that the effect of the at least one acceleration disturbance magnitude on the weight signal is essentially compensated for.

2. Weighing device according to Claim 1, **characterized in that** the at least one acceleration sensor (9) is joined rigidly to the weighing cells (3).

3. Weighing device according to Claim 1 or 2, **characterized in that** the weighing cells (3) and preferably also the at least one acceleration sensor (9) are joined mechanically rigidly to a rigid beam element (5), e.g. a common rigid base plate.

4. Weighing device according to one of the preceding claims, **characterized in that** the load introduction directions of the weighing cells (3) run essentially in parallel.

5. Weighing device according to one of the preceding claims, **characterized in that** the number and type of the acceleration sensors (9) is defined so that both an existing component of a purely translatory acceleration disturbance magnitude in the direction of the load introduction direction of each weighing cell (3) can be captured and/or determined, and also those existing components of rotatory acceleration disturbance magnitudes in the direction of the load introduction direction which are generated by a single-axis or multi-axis rotation disturbance movement of the weighing cells (3).

6. Weighing device according to Claim 5, **characterized in that** the at least one evaluation unit is in such a form that

(a) for every weighing cell (3), from the disturbance magnitude signals of the acceleration sensors (9), depending on the geometrical location of the relevant weighing cell (3) in relation to the geometrical locations of the acceleration sensors (9), it determines a correction magnitude, which takes account of the effect (which is effective at the geometrical location of the relevant weighing cell (3)) of the components of the acceleration disturbance magnitudes in the direction of the load introduction direction of the relevant weighing cell (3), and

(b) it links the weight signal (which is affected by the disturbance magnitude) of the relevant weighing cell (3) to the correction magnitude, or processes it computationally, in such a way that the effect of the components of the acceleration disturbance magnitudes in the direction of the load introduction direction of the relevant weighing cell (3) on the weight signal is essentially compensated for.

7. Weighing device according to Claim 5 or 6, **characterized in that** the number and type of the acceleration sensors (9) is defined so that in addition to the acceleration components in the load introduction direction of each weighing cell (3), at the location of each weighing cell, single-axis or multi-axis rotatory acceleration disturbance magnitudes, which affect the moment(s) of inertia around corresponding axes of those parts of the weighing cells (3) which are movable relative to a base body which is fixed in place, can be captured and/or determined.

8. Weighing device according to Claim 7, **characterized in that** the at least one evaluation unit is in such a form that

(a) for every weighing cell (3), from the disturbance magnitude signals of the acceleration sensors (9), depending on the geometrical location of the relevant weighing cell (3) in relation to the geometrical locations of the acceleration sensors (9), it determines a correction magnitude, which additionally takes account of the effect (which is effective at the geometrical location of the relevant weighing cell (3)) of the single-axis or multi-axis rotatory acceleration disturbance magnitudes on the moment(s) of inertia of the measurement mechanism of the relevant weighing cell (3) around corresponding axes, and

(b) it links the weight signal (which is affected by the disturbance magnitudes) of the relevant weighing cell (3) to the correction magnitude, or processes it computationally, in such a way that the effect of the rotatory acceleration disturbance magnitudes on the weight signal is essentially compensated for.

9. Weighing device according to Claim 5 or 6, **characterized in that** two translatory acceleration sensors (9), which are arranged at a predetermined interval, are provided, and that the weighing cells (3) are arranged on the connecting straight line of the two translatory acceleration sensors.

10. Weighing device according to Claim 9, **characterized in that** the at least one evaluation unit determines the weight signal $G_k(t)$ of a weighing cell (3) at the position k according to the relation

$$G_k(t) = m_k(t) + (m_k(t) + m_{VLk}) \cdot \frac{\ddot{z}_k(t)}{g}$$

where $m_k(t)$ designates the mass of the load on the weighing cell (3), $m_{VLk}$ designates the mass of the relevant moved mass of the measurement mechanism and the mass of an optional preload on the weighing cell (3) at position k, $\ddot{z}_k(t)$ designates the total translatory disturbance acceleration in the capture direction of the weighing cell (3) at the location of the weighing cell (3), and g designates the acceleration due to gravity, and that the weighing cell (3) determines the translatory disturbance acceleration according to the relation

$$\ddot{z}_k(t) = \ddot{z}_{BA1}(t) \cdot \frac{x_{BA2} - x_{WZk}}{x_{BA2} - x_{BA1}} + \ddot{z}_{BA2}(t) \cdot \frac{x_{WZk} - x_{BA1}}{x_{BA2} - x_{BA1}}$$

where $\ddot{z}_{BA1}(t)$ and $\ddot{z}_{BA2}(t)$ designate the measurement signals of the two translatory acceleration sensors (9), and $x_{BA1}$, $x_{BA2}$, $x_{WZK}$ designate the geometrical locations of the two translatory acceleration sensors and the relevant weighing cell (3) on the straight line.

11. Weighing device according to Claim 9, **characterized in that** additionally at least one further translatory acceleration sensor (9), which is at a predetermined distance from the connecting straight line, is provided.

12. Weighing device according to Claim 11, **characterized in that** the at least one further translatory acceleration sensor (9) is arranged on a mid-perpendicular onto the interval between the two translatory acceleration sensors (9).

13. Weighing device according to Claim 11 or 12, **characterized in that** the weighing cells (3) are in such a form, and arranged in such a way, that the measurement mechanism has a rotatory sensitivity to oscillation essentially only around a parallel axis to the straight line x, on which the weighing cells (3) are arranged.

14. Weighing device according to Claim 13, **characterized in that** the at least one evaluation unit determines the weight signal $G_k(t)$ of a weighing cell (3) at the position k according to the relation

$$G_k(t) = m_k(t) + (m_k(t) + m_{VLk}) \cdot \frac{\ddot{z}_{WZk}(t)}{g} + k_k \cdot \ddot{\varphi}_{xk}(t)$$

where $m_k(t)$ designates the mass of the load on the weighing cell (3), $m_{VLk}$ designates the mass of the relevant moved mass of the measurement mechanism and the mass of an optional preload on the weighing cell (3), $\ddot{z}_k(t)$ designates the total translatory disturbance acceleration in the capture direction of the weighing cell (3) at the location of this weighing cell, g designates the acceleration due to gravity, $k_k$ designates the rotatory sensitivity of the measurement mechanism of the weighing cell (3) at location k around a straight line parallel to the connecting straight line, and $\ddot{\varphi}_{xk}(t)$ designates the rotatory disturbance acceleration around this axis, that the at least one evaluation unit determines the translatory disturbance acceleration according to the relation

$$\ddot{z}_k(t) = \ddot{z}_{BA1}(t) \cdot \frac{x_{BA2} - x_{WZk}}{x_{BA2} - x_{BA1}} + \ddot{z}_{BA2}(t) \cdot \frac{x_{WZk} - x_{BA1}}{x_{BA2} - x_{BA1}}$$

where $\ddot{z}_{BA1}(t)$ and $\ddot{z}_{BA2}(t)$ designate the measurement signals of the two translatory acceleration sensors (9), and $x_{BA1}$, $x_{BA2}$, $X_{WZK}$ designate the geometrical locations of the two translatory acceleration sensors (9) and the relevant weighing cell (3) on the straight line, and that the at least one evaluation unit determines the rotatory disturbance acceleration $\ddot{\varphi}_{xk}(t)$ according to the relation

$$\ddot{\varphi}_{xk}(t) = \frac{\ddot{z}_{BA3}(t) - \frac{1}{2}\ddot{z}_{BA1}(t) - \frac{1}{2}\ddot{z}_{BA2}(t)}{y_{BA3} - \frac{1}{2}y_{BA1} - \frac{1}{2}y_{BA2}}$$

where $\ddot{z}_{BA1}(t)$, $\ddot{z}_{BA2}(t)$ and $\ddot{z}_{BA3}(t)$ designate the measurement signals of the two translatory acceleration sensors (9) and the further translatory acceleration sensor (9), and $y_{BA1}(t)$, $y_{BA2}(t)$ and $y_{BA3}(t)$ designate the geometrical locations of the translatory acceleration sensors (9) in a perpendicular direction to the straight line x.

15. Weighing device according to one of the preceding claims, **characterized in that** the acceleration sensors (9) are in the form of capacitive acceleration sensors, the deflection of a seismic mass from an initial position being captured capacitively, and the seismic mass being restored to the initial position by generation of an electrostatic force using a closed control loop, the necessary restoring force for this purpose being a measure of the captured acceleration.

16. Weighing device according to one of the preceding claims, **characterized in that** for each weighing cell, an evaluation unit is provided, or that for each group of weighing cells, an evaluation unit is provided.

**Revendications**

1. Dispositif de pesée

    (a) avec plusieurs cellules de pesée (3) reliées mécaniquement entre elles de manière rigide, lesquelles comportent chacune un récepteur de charge (7) qui peut être sollicité par une charge, avec une direction d'introduction de charge prédéfinie,
    (b) avec au moins un capteur d'accélération (9) pour relever au moins une grandeur de perturbation d'accélération et
    (c) avec au moins une unité d'interprétation à laquelle sont envoyés les signaux de poids produits par les cellules de pesée (3) et les signaux de grandeur de perturbation produits par les capteurs d'accélération (9),
    **caractérisé en ce que**
    (d) la au moins une unité d'interprétation est conçue

        (i) de manière à déterminer chaque fois pour chaque cellule de pesée (3), à partir du signal de grandeur de perturbation du au moins un capteur d'accélération (9), en fonction du lieu géométrique de la cellule de pesée (3) concernée par rapport au lieu géométrique du au moins un capteur d'accélération (9), une grandeur de correction qui tient compte de l'influence, agissant au lieu géométrique de la cellule de pesée (3) concernée, de la au moins une grandeur de perturbation d'accélération, et
        (ii) de manière à corréler à la grandeur de correction ou à traiter par le calcul le signal de poids, affecté de la au moins une grandeur de perturbation d'accélération, de la cellule de pesée (3) concernée, de façon à compenser pour l'essentiel l'influence de la au moins une grandeur de perturbation d'accélération sur le signal de poids.

**2.** Dispositif de pesée selon la revendication 1, **caractérisé en ce que** le au moins un capteur d'accélération (9) est relié rigidement aux cellules de pesée (3).

**3.** Dispositif de pesée selon l'une quelconque des revendications 1 ou 2, **caractérisé en ce que** les cellules de pesée (3) et de préférence aussi le au moins un capteur d'accélération (9) sont reliés mécaniquement et rigidement à un élément de support (5) rigide, par exemple à une embase rigide commune.

**4.** Dispositif de pesée selon l'une quelconque des revendications 1 à 3, **caractérisé en ce que** les directions d'introduction de charge des cellules de pesée (3) s'étendent sensiblement parallèlement.

**5.** Dispositif de pesée selon l'une quelconque des revendications 1 à 4, **caractérisé en ce que** le nombre et le type des capteurs d'accélération (9) sont définis de manière qu'il soit possible de relever et/ou de déterminer aussi bien une composante, existant dans la direction du sens d'introduction de charge de chaque cellule de pesée (3), d'une grandeur de perturbation d'accélération purement translatoire, que les composantes existant dans la direction du sens d'introduction de charge de grandeurs de perturbation d'accélération rotatoire qui sont produites par un mouvement de perturbation en rotation à un ou plusieurs axes des cellules de pesée (3).

**6.** Dispositif de pesée selon la revendication 5, **caractérisé en ce que** la au moins une unité d'interprétation est conçue

(a) de manière à déterminer chaque fois pour chaque cellule de pesée (3), à partir des signaux de grandeur de perturbation des capteurs d'accélération (9), en fonction du lieu géométrique de la cellule de pesée (3) concernée par rapport aux lieux géométriques des capteurs d'accélération (9), une grandeur de correction qui tient compte de l'influence, agissant au lieu géométrique de la cellule de pesée (3) concernée, des composantes de grandeur de perturbation d'accélération dans la direction du sens d'introduction de charge de la cellule de pesée (3) concernée, et
(b) de manière à corréler à la grandeur de correction ou à traiter par le calcul le signal de poids affecté de la grandeur de perturbation de la cellule de pesée (3) concernée, de façon à compenser pour l'essentiel l'influence des composantes des grandeurs de perturbation d'accélération dans la direction du sens d'introduction de charge de la cellule de pesée (3) concernée sur le signal de poids.

**7.** Dispositif de pesée selon l'une quelconque des revendications 5 ou 6, **caractérisé en ce que** le nombre et le type des capteurs d'accélération (9) sont définis de manière à pouvoir relever et/ou déterminer, en plus des composantes d'accélération dans le sens d'introduction de charge de chaque cellule de pesée (3), sur le lieu de chaque cellule de pesée, des grandeurs de perturbation d'accélération rotatoire à un ou plusieurs axes, lesquelles agissent autour d'axes correspondants sur le ou les moments d'inertie des parties, mobiles par rapport à un corps de base fixe, des cellules de pesée (3).

**8.** Dispositif de pesée selon la revendication 7, **caractérisé en ce que** la au moins une unité d'interprétation est conçue

(a) de manière à déterminer chaque fois pour chaque cellule de pesée (3), à partir des signaux de grandeur de perturbation des capteurs d'accélération (9), en fonction du lieu géométrique de la cellule de pesée (3) concernée par rapport aux lieux géométriques des capteurs d'accélération (9), une grandeur de correction qui tient compte, en plus de l'influence, agissant au lieu géométrique de la cellule de pesée (3) concernée, des grandeurs de perturbation d'accélération rotatoire à un ou plusieurs axes, sur le ou les moments d'inertie du mécanisme de mesure de la cellule de pesée (3) concernée, autour d'axes correspondants, et
(b) de manière à corréler à la grandeur de correction ou à traiter par le calcul le signal de poids affecté de la grandeur de perturbation de la cellule de pesée (3) concernée, de façon à compenser pour l'essentiel l'influence des grandeurs de perturbation d'accélération rotatoire sur le signal de poids.

**9.** Dispositif de pesée selon les revendications 5 et 6, **caractérisé en ce que** sont prévus deux capteurs d'accélération translatoire (9), disposés à une distance prédéterminée, et **en ce que** les cellules de pesée (3) sont disposées sur les droites de liaison des deux capteurs d'accélération translatoire.

**10.** Dispositif de pesée selon la revendication 9, **caractérisé en ce que** la au moins une unité d'interprétation détermine le signal de poids $G_k(t)$ d'une cellule de pesée (3) sur la position k selon la relation

$$G_k(t) = m_k(t) + (m_k(t) + m_{VLk}) \cdot \frac{\ddot{z}_k(t)}{g} \ ,$$

$m_x(t)$ désignant la masse de la charge sur la cellule de pesée (3), $m_{VLK}$ la masse propre de la masse déplacée significative du mécanisme de mesure et la masse d'une tare optionnelle sur la cellule de pesée (3) à la position $k$, $\ddot{z}_k(t)$ la totalité de l'accélération de perturbation translatoire dans la direction de pesée de la cellule de pesée (3) à l'emplacement de la cellule de pesée (3), et g l'accélération terrestre, et **en ce que** la cellule de pesée (3) détermine l'accélération de perturbation translatoire selon la relation

$$\ddot{z}_k(t) = \ddot{z}_{BA1}(t) \cdot \frac{x_{BA2} - x_{WZk}}{x_{BA2} - x_{BA1}} + \ddot{z}_{BA2}(t) \cdot \frac{x_{WZk} - x_{BA1}}{x_{BA2} - x_{BA1}}$$

dans laquelle $\ddot{z}_{BA1}(t)$ et $\ddot{z}_{BA2}(t)$ désignent les signaux de mesure des deux capteurs d'accélération translatoire (9), et $x_{Ba1}$, $x_{BA2}$, $x_{WZk}$ désignent les lieux géométriques des deux capteurs d'accélération translatoire et de la cellule de pesée (3) concernée sur les droites.

11. Dispositif de pesée selon la revendication 9, **caractérisé en ce qu'**il est prévu en outre au moins un autre capteur d'accélération translatoire (9) qui présente une distance prédéterminée par rapport aux droites de liaison.

12. Dispositif de pesée selon la revendication 11, **caractérisé en ce que** le au moins un autre capteur d'accélération translatoire (9) est disposé sur une perpendiculaire médiane sur la distance entre les deux capteurs d'accélération translatoire (9).

13. Dispositif de pesée selon l'une quelconque des revendications 11 ou 12, **caractérisé en ce que** les cellules de pesée (3) sont conçues et disposées de manière que le mécanisme de mesure présente une sensibilité rotatoire aux oscillations essentiellement uniquement autour d'un axe parallèle à la droite $x$ sur laquelle sont disposées les cellules de pesée (3).

14. Dispositif de pesée selon la revendication 13, **caractérisé en ce que** la au moins une unité d'interprétation détermine le signal de poids $G_k(t)$ d'une cellule de pesée (3) à la position $k$ selon la relation

$$G_k(t) = m_k(t) + (m_k(t) + m_{VLk}) \cdot \frac{\ddot{z}_{WZk}(t)}{g} + k_k \cdot \ddot{\varphi}_{xk}(t)$$

dans laquelle $m_k(t)$ désigne la masse de la charge sur la cellule de pesée, $m_{VLK}$ la masse propre de la masse déplacée significative du mécanisme de mesure et la masse d'une tare optionnelle de la cellule de pesée (3), $\ddot{z}_k(t)$ l'accélération de perturbation translatoire totale dans la direction de pesée de la cellule de pesée (3) à l'emplacement de cette cellule de pesée, g l'accélération terrestre, $k_k$ la sensibilité rotatoire du mécanisme de mesure de la cellule de pesée (3) à l'emplacement k autour d'une droite parallèle aux droites de liaison, et $\ddot{\varphi}_{xk}(t)$ l'accélération de perturbation rotatoire autour de cet axe, **en ce que** la au moins une unité d'interprétation détermine l'accélération de perturbation translatoire selon la relation

$$\ddot{z}_k(t) = \ddot{z}_{BA1}(t) \cdot \frac{x_{BA2} - x_{WZk}}{x_{BA2} - x_{BA1}} + \ddot{z}_{BA2}(t) \cdot \frac{x_{WZk} - x_{BA1}}{x_{BA2} - x_{BA1}}$$

dans laquelle $\ddot{z}_{BA1}(t)$ et $\ddot{z}_{BA2}(t)$ désignent les signaux de mesure des deux capteurs d'accélération translatoire (9), et $x_{Ba1}$, $X_{BA2}$, $X_{WZK}$ les lieux géométriques des deux capteurs d'accélération translatoire (9) et de la cellule de pesée (3) concernée sur la droite, et **en ce que** la au moins une unité d'interprétation détermine l'accélération de perturbation rotatoire $\ddot{\varphi}_{xk}(t)$ selon la relation

$$\ddot{\varphi}_{xk}(t) = \frac{\ddot{z}_{BA3}(t) - \dfrac{1}{2}\ddot{z}_{BA1}(t) - \dfrac{1}{2}\ddot{z}_{BA2}(t)}{y_{BA3} - \dfrac{1}{2}y_{BA1} - \dfrac{1}{2}y_{BA2}}$$

dans laquelle $\ddot{z}_{BA1}(t)$, $\ddot{z}_{BA2}(t)$ et $\ddot{z}_{BA3}(t)$ désignent les signaux de mesure des deux capteurs d'accélération translatoire (9) et de l'autre capteur d'accélération translatoire (9), et $y_{ba1}$, $Y_{BA2}$ et $y_{BA3}$ désignent les lieux géométriques des capteurs d'accélération translatoire (9) dans une direction perpendiculaire à la droite x.

15. Dispositif de pesée selon l'une quelconque des revendications 1 à 14, **caractérisé en ce que** les capteurs d'accélération (9) sont conçus sous la forme de capteurs d'accélération capacitifs, la déviation d'une masse sismique depuis une position initiale étant relevée de manière capacitive et la masse sismique étant replacée dans la position initiale par génération d'une force électrostatique en utilisant un circuit de régulation fermé, la force de rappel nécessaire à cet effet représentant une dimension de l'accélération relevée.

16. Dispositif de pesée selon l'une quelconque des revendications 1 à 15, **caractérisé en ce qu'**il est prévu une unité d'interprétation par cellule de pesée ou **en ce qu'**il est prévu une unité d'interprétation respectivement pour un groupe de cellules de pesée.

Fig. 1

Fig. 2

18

EP 1 872 100 B1

**Fig. 3**

Fig. 4

## IN DER BESCHREIBUNG AUFGEFÜHRTE DOKUMENTE

**In der Beschreibung aufgeführte Patentdokumente**

- DE 3230998 A1
- DE 4001614 A1